# EUROPEAN PATENT SPECIFICATION

(11) **EP 3 224 004 B1**
(45) Date of publication and mention of the grant of the patent: **17.11.2021**
(21) Application number: 15818048.9
(22) Date of filing: 23.11.2015
(51) Int. Cl.: B25J 9/16, G01S 17/48

(54) **ROBOTIC SYSTEM COMPRISING A TELEMETRIC DEVICE WITH A LASER MEASURING DEVICE AND A PASSIVE VIDEO CAMERA**
ROBOTISCHES SYSTEM MIT EINER TELEMETRISCHEN VORRICHTUNG MIT EINEM LASERMESSGERÄT UND MIT EINER PASSIVEN VIDEOKAMERA
SYSTÈME ROBOTIQUE COMPRENANT UN DISPOSITIF TÉLÉMÉTRIQUE AVEC UN APPAREIL DE MESURE LASER ET UNE CAMÉRA VIDEO PASSIVE

(30) Priority: 25.11.2014 IT PD20140325
(43) Date of publication of application: 04.10.2017
(73) Proprietor: Quartesan, Diego, 35030 Selvazzano Dentro (PD) (IT)
(72) Inventor: Quartesan, Diego, 35030 Selvazzano Dentro (PD) (IT)
(74) Representative: Fabris, Stefano
(86) International application number: PCT/IB2015/059030
(87) International publication number: WO 2016/083972

(56) References cited:
- EP-A2- 0 263 952
- WO-A1-00/39522
- WO-A1-2014/061372
- JP-A- 2003 311 670
- US-A1- 2013 226 345
- US-B1- 6 937 352

## Description

### Technical field

The present invention relates to a robotic system for the seeking, recognition, relative orientation and/or orientated following of targets or other similar objective signs associated with objects or with surface portions of the objects, having the characteristics stated in the preamble of Claim 1, which is the principal claim.

The invention is also concerned with a method for the operational control of the aforesaid robotic system.

### Technological background

Robotic systems using robots which may be anthropomorphic, Cartesian or hybrid, designed to execute sequences of work operations automatically, have been widely used for some time in many applications. In general terms, a robot may be distinguished from other automatic machines by its capacity to carry out different operations or processes in a predetermined space, due to its programmability. It is normally controlled by a programmable computerized system, also known by the abbreviation PLC (programmable logic controller). Typically, the controller runs programs for processing digital and analog signals, these signals being received from sensors operationally associated with the robot and being sent to the actuators provided to cause the movement of the robot. In the specific field of multi-axis industrial robots, with which the present invention is particularly, but not exclusively, concerned, the robot typically comprises, as is well known, a base structure from which there extends a chain of elements (shaped, for example, as a plurality of "arms" in anthropomorphic versions), mutually articulated with one another by means of joints, these elements connecting the base structure to a terminal structure known as the "robot wrist". The effector, for carrying out the work or the operational process, is normally fixed via a connecting flange to the robot wrist, which is typically made in the form of a terminal joint that can be orientated in space. Typical examples of effectors may include a manipulator, a clamp or other tool, designed to perform corresponding operations of gripping, moving, or more generally working on an object present in the operating space of the robot.

In this field, there is a known way of identifying one or more significant points associated with the end of the effector, which are related to a predetermined reference system and can assume a plurality of spatial positions, which are calculated relative to the reference system, and which can be reached by means of the movement commands sent to the robot. These positions are typically correlated with the positions and orientations of the objects or bodies with which the robot has to interact in order to perform the specified operations. These positions are also known in the relevant technical field as "targets", and can be associated, for example, with specific surface portions of an object that must be reached by the operating end of the robot to perform the desired work. If these targets are associated with rigid bodies in space, one of the procedures typically followed is that of representing the position by using a single point accompanied with information that can be used to determine both the exact position of the body and its spatial orientation. By means of known criteria and algorithms, using rotation matrices or Eulerian angular coordinates for example, it is possible to determine uniquely the position and orientation of a rigid body in space relative to a predetermined reference system, so that the robot can be brought, with its operating end, into a predetermined orientation relative to the position of the target, in order to execute the specified work.

In known applications, provision is made in the robot's operating space for the activation of sensors which are external to the robot and are therefore kept fixed relative to the kinematic chain of the robot which moves in the operating space assigned to it, these sensors detecting the position of the target and guiding the robot externally to seek the target or move along a target following path, if the work process requires this.

This configuration therefore requires the provision of a sensor system external to the robot, associated with the robot's operating space, and capable of sending signals representing the position and orientation of the target to the corresponding controller, so that the controller then generates the corresponding control signals to the motors which move the robot, such that the robot can be guided to the target.

In some applications, however, systems of this type are rather complicated, because they require the external sensor system to be effective at all points in the robot's operating space, even though this space may be of considerable size; furthermore, the space may be characterized by environmental conditions which are detrimental to the effectiveness and reliability of the measurements made by the sensors. For example, in environments with particularly unfavourable atmospheres, interference may be generated which may compromise or reduce the effectiveness of the functions of external sensor devices associated with the robot. Another limitation is encountered when it is necessary to reach objects to be gripped which are not positioned in a precise and ordered way, or which have an inclination such that the conventional viewing or telemetric systems associated with the external sensor devices cannot operate unless continual adjustments are made to the structure supporting them. The patent application JP 2003 311670 is directed for example to a position control system of a robot arm, including a laser displacement sensor in addition to a CCD camera.

The sensor is provided to measure the distance from the object and to compare said measurement with the data from the camera, in order to control, with high precision, the distance between the object and the robot arm.

### Description of the invention

The main object of the invention is to provide a robotic system of the aforesaid type which is structurally and functionally designed to overcome the limitations identified with reference to the known solutions.

This and other objects, which will be more apparent from the following text, are achieved by the invention by means of a robotic system and a method for the operational control of this system, provided in accordance with the appended claims.

### Brief description of the drawings

Other features and advantages of the invention will become clear from the following detailed description of a preferred example of embodiment thereof, illustrated, purely for guidance and in a non-limiting way, by the attached drawings, in which:
- Figure 1 is a schematic perspective view of an example of a robotic system made according to the invention,
- Figures 2 and 3 are views, in side elevation and in plan view from above respectively, of the robotic system of Figure 1,
- Figures 4, 5 and 6 are a perspective view, a front elevation and a side elevation, respectively, on an enlarged scale, of a detail of the robotic system of the preceding figures,
- Figure 7 is a schematic perspective view of the detail of Figure 3 in an operating step.

### Preferred examples of the invention

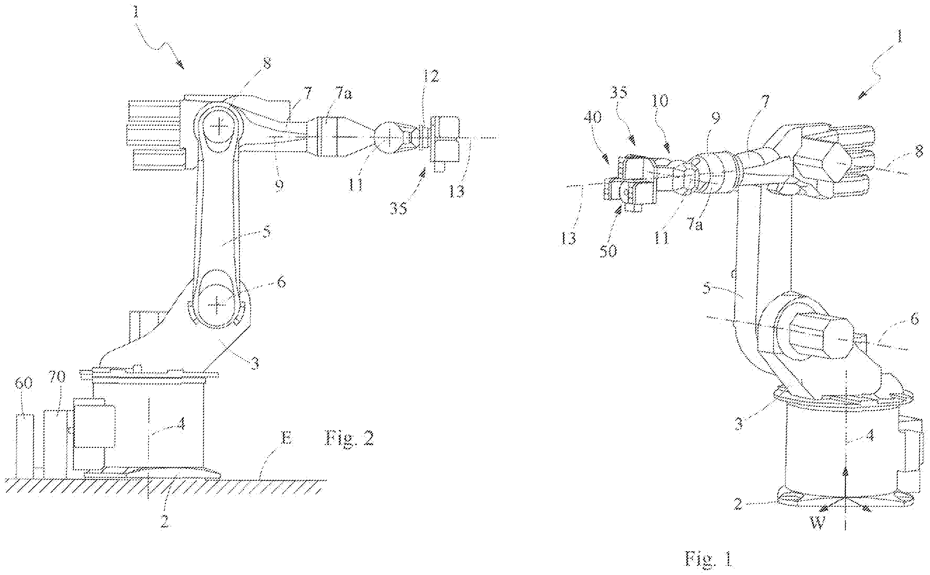

With initial reference to Figures 1 to 3, these show an example of a robotic system according to the present invention, with a robot identified as a whole by the number 1.

The robot in this example is of the anthropomorphic industrial type, but it is to be understood that the inventive concept of the present invention can also be applied to robots of other types, for example Cartesian or hybrid robots.

The robot 1 comprises a base structure 2 which supports an upright 3 rotatably about a first axis 4 running vertically. The number 5 indicates an arm supported rotatably on the upright 3 about a second axis 6 running horizontally. The terms "vertically" and "horizontally" are to be considered as referring to a conventional plane E of the ground on which the robot rests.

The number 7 indicates a forearm mounted rotatably on the arm 5 about a third axis 8 which also runs horizontally. A portion 7a of the forearm 7 can also rotate about its main axis 9, which thus forms a fourth axis of movement of the robot 1. A robot wrist device 10 is supported in an articulated way on the portion 7a. This wrist is mounted rotatably on the portion 7a about a fifth axis 11 running perpendicularly to the axis 9. A flange 12, supported rotatably on the wrist about a sixth axis 13, is provided at the free end of the wrist 10.

With this configuration, the robot 1 can be identified as an anthropomorphic robot with six degrees of rotational freedom.

As is known from robot kinematics, the sequence of rigid parts (or arms, also known by the English term "links") and joints (corresponding to the articulations between the rigid parts) provides the necessary degrees of freedom to the robot for its movement, so that it can reach specific points or positions in its operating space. Since operating terminal members (or tools) (such as manipulators or clamps, when objects are to be gripped and manipulated) are generally associated with the wrist of the robot, robots are conventionally designed so that the operating member can reach every reachable point in the operating space by means of a certain orientation. For example, if a point in the operating space is to be reached by means of any given orientation, at least three degrees of translational freedom (Cartesian coordinates) and three degrees of rotational freedom (Eulerian coordinates/quaternions) are typically used. This is because a total of six degrees of freedom, provided by six corresponding joint/arm pairs of the robot, arranged in a suitable sequence (avoiding, for example, consecutive joints producing rotations about the same axis), enable the end of the operating member of the robot to be placed in any position in space and in any orientation. Clearly, robots with a smaller or greater number of degrees or freedom exist, or may be designed, according to specific operating requirements.

Purely by way of example, the following text refers to a generic object or rigid body 20 (only shown partially and schematically in the figures) located in the robot's operating space, with which the robot is designed to interact, assuming that the operating end of the robot (correlated with the wrist 10) can reach any position and orientation relative to the body 20 or to points belonging to surface portions of the body.

In the following description, the term "target" also denotes an objective sign 30 which belongs to a surface portion 20a of the body 20, and which can therefore identify the position and orientation of the body itself or of its portion 20a within the operating space.

The target 30 can have any shape suitable for its function of marking a certain object (or a surface portion thereof) and identifying a predetermined position and orientation relative to the object. The target may, for example, be designed in the form of an image or a geometric entity, or an alphanumeric code or other similar sign or mark suitable for the purpose.

In the preferred example which is described, reference will be made to a target 30 of triangular shape, although this choice is not in any way limiting in respect of the claimed inventive concept.

In the following text, the operating space of the robot is also defined relative to a reference system W fixed with respect to the robot's base structure 2, this system being formed, for example, by a set of three Cartesian axes X, Y, Z having its origin, by convention, in the base structure. With respect to the reference system W, each point in the operating space, with coordinates x, y, z, rx, ry, rz (where x, y, z denote the Cartesian coordinates of the point and rx, ry, rz denote the Eulerian angular coordinates relative to the corresponding axes of the system W), can be reached, with a predetermined spatial orientation, by the operating terminal member of the robot, by means of corresponding commands sent to motor means (partially shown in Figures 1 - 3) provided to control the movement of the robot's arms about the corresponding axes of articulation. According to a principal characteristic of the invention, the robotic system comprises a head 35 fixed to the wrist 10 of the robot, this head in turn comprising a telemetric device 40 having three laser measuring devices 40a, b, c and a passive viewing device 50 with a video camera 50a, both incorporated in the head 35.

The laser measuring devices 40a, b, c and the video camera 50a are conveniently provided on the same side of a plate-like element 35a of the head 35, this element being fixed on its opposite side to the robot flange 12.

The operational control of the telemetric device 40 and the passive viewing device 50, as well as the control of the movement of the robot, is provided by a programmable computerized system including at least one PLC controller.

As described more fully below, the computerized system is provided with suitable means for analysing the signals relating to the images acquired by the video camera 50a and for analysing the telemetric data acquired by the laser measuring devices, the signals being associated with the target 30 for the seeking and recognition of the target, and for the orientation of the head relative to the target. The computerized system also provides means for processing, on the basis of the analyses performed, corresponding signals for controlling the movement of the robot, to be sent to the motor means of the latter for positioning the robot relative to the target and/or for following the target in an orientated way (within the operating space of the robot).

The operations of analysing and processing the signals received from the three laser measuring devices 40a, b, c and from the video camera are controlled by a PLC controller, having appropriate processing capacity, which is, for example, located externally to the robot.

If the PLC controller has insufficient processing capacity, provision may be made (as in this example) for using a pair of controllers, for example a PLC controller external to the robot, indicated by 70, adjacent to a controller 60 of the robot (robot PLC), which is only shown schematically in the figures. The PLC 70 has means for analysing the signals received from the lasers and from the video camera and means for sending the signals, after suitable processing, to the robot. The robot PLC 60 is responsible for storing the coordinates for reaching the predetermined position and orientation of the robot relative to the target, and for deciding on the movement procedure to be executed by the head of the robot. The choice of the PLC external to the robot is dictated by the existing technical limitation, in terms of processing, of the robot controller, which typically prioritizes motor control (including, as is known, control of the position ring, the speed ring and the current ring) and therefore cannot combine the functionality of both PLCs in a high-performance way.

The PLCs are therefore used to process and send to the motors the signals for controlling the movement of the robot in any direction and orientation in space so as to reach with the head 35 any point in the corresponding operating space assigned to the robot.

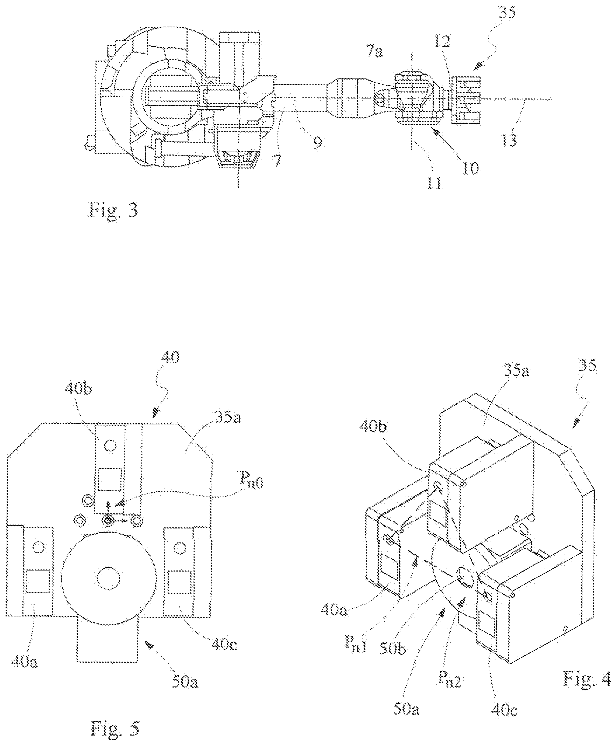

Pn0 indicates a second reference system formed by a set of three Cartesian axes x, y, z fixed to the head 35. Provision is made, in a substantially known way, for good knowledge of the parameters relating or correlating the reference system W fixed to the base 2 with the reference system Pn0 fixed to the head 35, these parameters principally relating to the geometry of the structure of the robot. For convenience of construction, the three laser generators of the measuring devices 40a, b, c may lie on one plane, but do not necessarily do so. The set of three output points of the light beams of the three lasers therefore describe a plane indicated by Pn1 (Fig. 4).

The video camera 50a, which may be, but is not necessarily, placed in a known position relative to the three lasers, may or may not lie in the same plane as that in which the three lasers lie. The plane in which the video camera lies is indicated by Pn2. Regardless of the positions of the aforesaid devices on various planes, it is necessary to know the spatial coordinates of each of these devices relative to the single common plane defined as the centre of the reference system Pn0 (the whole system also referring to, or being related to, a further reference system TO lying on the robot flange).

The device 40 is designed so that each laser measuring device 40a, b, c can detect the distance between the head 35 and a surface S of the body 20 to which the target 30 belongs.

Each laser measuring device 40a, b, c has a structure and operating mode of a substantially conventional type, and is designed to make high-precision measurements, preferably with errors of less than a tenth of a millimetre. Since the emission point of the laser of each measuring device is located on the head in a known position in the reference system Pn0, the measurement of the distance between the head 35 and a point on the body 20 makes it possible to identify the coordinates of this point relative to the system Pn0, and also, indirectly, relative to the reference system W.

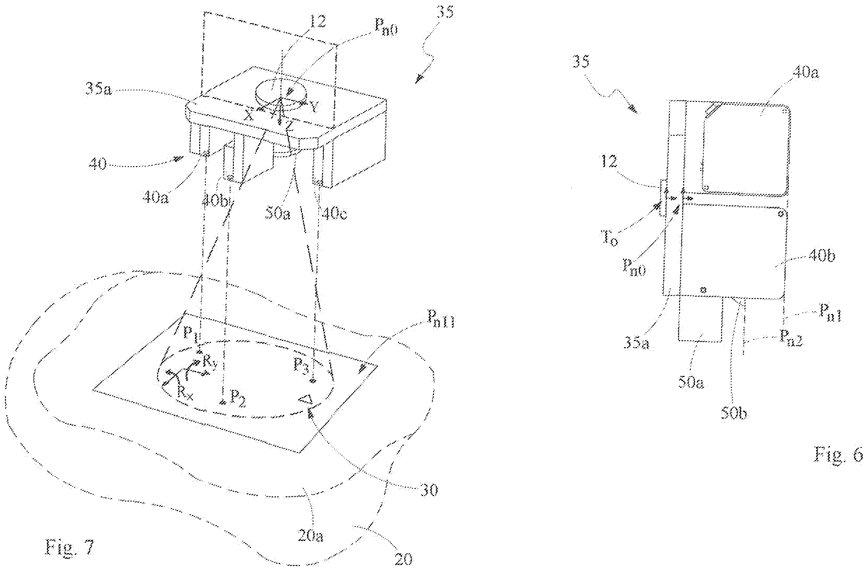

More particularly, the three lasers project the same number of light beams on to the body 20 with which the target is associated; the three light points projected by the lasers naturally identify a new plane indicated as Pn11 (Fig. 7) which is assumed to coincide, subject to a certain degree of approximation, with the plane in which the target lies. The values of distance between the three laser measuring devices and the plane on which the three laser beams are projected determine both a partial orientation and the distance from the plane Pn11, in which the target lies, from Pn1 and therefore from the plane Pn0. The useful data that can be obtained from this plane Pn11 relative to the robot head, that is to say relative to the reference system Pn0, are the distance Z between the planes Pn11 and Pn0 and the roll angle Rx and pitch angle Ry between the planes Pn11 and Pn0.

In other words, the distances measured by the three lasers 40a, b, c are used to determine the positions of three respective points P1, P2, P3 on the surface S (and consequently to determine the coordinates of the points P1, P2, P3 relative to the reference Pn0), and in this way the plane Pn11 in which the target 30 lies relative to the head 35 (the plane to which the points P1, P2 and P3 belong) is identified. The position and orientation of the plane Pn11 is also identified in a unique way relative to the head 35 by three coordinates, namely the coordinate Z, the angle of torsion Rx about the axis x and the angle of torsion Ry relative to the axis y. These angular coordinates Rx and Ry, also known in the field of robotics as the roll coordinate (Rx) and the pitch coordinate (Ry) respectively, represent a preferred, but not limiting, procedure for representing, together with the coordinate Z, the position of the plane Pn11 in which the target 30 lies relative to the head 35.

As an alternative to the laser measuring system, the device 40 can be provided with measuring devices operating with ultrasonic technology, the operating procedures being entirely similar to those specified for laser measuring devices. In a similar way to the operation of the lasers, the video camera 50a detects, by means of its internal sensor, the position of the target 30, still located on the plane Pn11 (or at least near it), relative to the reference system Pn0. Thus it is possible to determine the positions X, Y and the yaw angle, that is to say the torsion angle, about the axis Z of the target relative to the plane Pn2 and consequently relative to the plane Pn0.

In other words, the video camera 50a is used to read the position of the target 30 on the plane Pn11 in which it lies, as well as the torsion Rz of the head relative to this plane. Thus the coordinates X, Y and the angular coordinate Rz, also known as the yaw coordinate, are identified.

Using the set of these three Cartesian and Eulerian coordinates, the position of the target 30 relative to the head 35 of the robot (the plane Pn0) can be identified. With this information, the movement of the head of the robot can be controlled to capture the target in any position, including the Cartesian and Eulerian position.

To summarize, the combined action of the devices 40 and 50 is used to identify six coordinates relating to the target 30, that is to say three Cartesian and three Eulerian coordinates, namely the three spatial coordinates X, Y, Z and the three roll (Rx), pitch (Ry) and yaw (Rz) coordinates.

The chosen video camera 50a is conveniently a conventional CCD video camera, generating a conventional video signal. The device 50 also comprises an image acquisition card connected to a computer with a corresponding communication device (not shown), the aforesaid card being designed to sample the video signal from the video camera and store it in a memory bank of the computer in the form of an image matrix. The essential advantage of the video camera is related to the procedure for framing and recognizing the target for the purpose of estimating its position and orientation relative to the head. In a conventional way, the video camera can therefore reconstruct an image and extract geometric information from it. On the basis of the framed visual space, the viewing system composed of the video camera and the acquisition card supplies a spatial representation called the "image matrix" at the output.

Matrix analysis techniques can be used with substantially conventional procedures and criteria to identify and reconstruct the shape of any target framed by the sensor, and to compare this shape with one of the possible shapes known to the system. If the target is then recognized in the space framed by the sensor of the video camera, the position and orientation of the head relative to the target is consequently identified.

Figure 4 shows a preferred configuration of the arrangement of the laser measuring devices 40a, b, c and the video camera 50a on the head 35. In this arrangement, as mentioned above, it is essential to know the positions of the laser beam emission points and the position of the optical centre 50b of the video camera relative to the reference Pn0 fixed to the head, in order to determine in a unique way the position and orientation of the target 30 relative to the head. Using mathematical systems and criteria which are well known in the field of robotics, point coordinates can also be converted and transferred easily from one reference system to the other, and in particular between the systems Pn0 and W, so that the robot can be controlled in such a way that the head 35 can reach a predetermined position and orientation relative to the target 30.

In fact, the combined action of the devices 40 (three lasers) and 50 (the video camera) can be used to seek and lock on to the target 30, and to follow it, if necessary, when it moves in the operating space of the robot. When the robot has identified and locked on to the target 30, the latter may move in any direction and orientation in space, and the robot will accurately follow the movements of the target, adapting to its position and orientation.

For the purpose of target following in the case of a moving target, the laser measurement of the device 40 and the image acquisition and scanning by the video camera 50a must take place at a predetermined frequency, to obtain the coordinate sequence identifying the current position and orientation of the target at each data acquisition step, related to the frequency. The logic of the system is therefore designed to calculate by a difference method the current configuration (coordinate sequence) relative to the preceding configuration, in order to move the robot in a consistent way to reposition it relative to the target. The calculation logic is therefore applied sequentially for each scan, thereby identifying the appropriate robot movement for following the target.

It should also be noted that it is possible to specify and program different criteria with which the robotic system can approach the task of seeking the target in a predetermined operating area of the robot. If a first combined action by the lasers and the video camera does not detect the presence of the target (because the target is outside the visual field of the video camera), the head can, for example, initiate a predetermined movement to scan contiguous regions of the operating space in search of the target, or can be moved through a suitable distance towards the body 20 in order to extend the visual field of the video camera. It is also possible to provide a different and separate approach in which the head is initially made to seek the target, the telemetric device and the passive viewing device being operated according to predetermined operating sequences.

The procedures by which the robotic system described above is controlled can also be expressed in the form of an operational control method comprising a sequence of steps as described in detail below.

In a first step, the devices 40 and 50 are actuated to acquire the telemetric data from the laser measuring devices 40a, b, c in order to calculate the plane in which the target lies, and to acquire and process the image captured by the video camera, in order to determine the position of the target in the plane in which it lies. In this step, the position and orientation of the target relative to the head of the robot are therefore determined by the combined action of the devices 40 and 50.

In a subsequent step, the predetermined position and orientation to be assumed by the head relative to the identified target are calculated, and consequently the signals for controlling the movement of the robot are calculated, these signals being sent to the motors so that the predetermined condition of position and orientation can be reached.

If the target is subject to a movement in the operating space of the robot, it is possible to provide functionality for locking on to the target and following it in an orientated way. This functionality is provided by repeating the steps of telemetric data acquisition and image acquisition relating to the target at a predetermined frequency, followed by a step in which the differences between the current condition (position and orientation) of the target and the preceding condition are measured. The measured differences are used as the basis for identifying the sequence of coordinates (position and orientation) of the head that must be achieved in order to lock on to the target with the predetermined orientation in the following movement.

It should also be noted that, when the coordinates of the target 30 (the six coordinates x, y, z and Rx, Ry, Rz in the example described), correlated with its position and orientation relative to the head, have been identified by the aforesaid procedures, it is possible to provide a plurality of possible functionalities relating to the orientation of the head relative to the target, some of which are described below purely by way of example.

In a first example of an operating procedure, it is possible to reorientate the head 35 of the robot so that it is either parallel or non-parallel, as required, to the surface of the plane Pn11 in which the target lies. Parallel positioning is one of the infinite number of possible orientations of the head relative to the plane in which the target lies. Alternatively, there is an equally infinite number of possible inclinations of the head 35 relative to the plane Pn11 of the target. The object or body 20 can thus be reached in an infinite number of different ways.

In a second procedure, it is possible to predetermine or select a "distance" that must be present between the target 30 and the head 35 of the robot. This distance may remain constant or may vary, as required. In other words, it is possible to maintain predetermined distances from the target or vary them continuously to the point of actual contact with the target, if this is required. Clearly, it is possible to provide other, different functionalities, all of which are united in the advantage that the robotic system of the invention can recognize the position and orientation of a target which may be fixed or moving in the assigned operating space, and can lock on to the target while maintaining a predetermined position relative to the latter, possibly along a target following path.

It is also evident that all the advantages described above in respect of the relative orientation and positioning between the robot head and the target can be replicated with reference to any operating terminal member (or tool) associated with the wrist of the robot and designed to interact with the object or body 20. This is because, when there is a known geometric correlation (relative positioning) between the operating terminal of the robot and the head 35 equipped with the sensing devices 40 and 50, the operating terminal of the robot can be associated for operation with the target, according to the functionalities described above. Thus the robot can interact with the object 20 by intercepting, locking on to, and if necessary following the target, as well as by executing any specified steps of working on the object 20 (using its operating terminal).

The robot may also receive the operating instructions either from the shape of the object with which it interacts, or from a code contained in the object (for example, a QR code or other suitable identification code). By acquiring these instructions, the robot is able to execute the specified operating sequences, for example the movement, positioning or working of the object in a specific operating area or centre. Considering, purely by way of example, the machining of engine blocks for vehicles, it is possible to provide an operating sequence in which the robot can grip an engine block regardless of its position, since it is capable of searching for its shape or an identification code on the object, and can also execute mechanical machining, for example deburring the engine block, because it is capable of reading and acquiring the instructions associated with the code (provided in the form of an identification tag, for example).

In another application, provision may be made to mount the robot on a self-propelled vehicle which can move relative to objects with large surface areas. By recognizing and reading the instructions contained in the code, the robot can position itself correctly relative to the surface of the object present in the operating area, and by acquiring the operating instructions contained in the code it can execute the specified work. A typical application, in this case, may for example include operations of sanding, grinding and painting large surfaces of ships' hulls. Regardless of its position in the operating area, the hull is recognized by the robot, which can therefore reach it by using the self-propelled vehicle to which it is attached, and can then interact with the surface of the hull to perform the work specified by the operating instructions contained in the code and acquired by the robot.

Similar applications can be devised in the aeronautical field, where the robot according to the invention is designed to interact, by the aforementioned procedures, with the large surfaces of an aircraft fuselage or wing.

It should be noted that, by comparison with the known solutions which provide sensor systems external to the robot for guiding the robot to seek the target, the present invention enables the sensor system of the robot to become dynamic, in that the devices 40 and 50, including the laser measuring devices and the video camera respectively, move continuously, integrally with the head, and therefore the moving references are continuously recalculated. The robot does not require an external guide to lead and manoeuvre it, but becomes fully autonomous and self-controlling while accurately following the movements of the target, adapting to the position and orientation of the latter.

The robotic system of the present invention has multiple applications, and can be used, by way of non-limiting example, to guide and direct the terminal structure of the robot so as to execute, using suitable actuator members, actions of gripping objects, identifying surfaces, milling, polishing, painting, and identifying reference planes for the execution of an infinite number of types of work.

It must also be emphasized that the robotic system of the invention can be associated with robots of any type, including anthropomorphic, Cartesian and hybrid robots, or other devices, provided that they are equipped with a terminal joint which can be re-orientated in space, so that the robot head can be positioned relative to the target in any predetermined orientation.

It should also be noted that the provision of a robot fixed to the ground by anchoring the base structure to the ground is one of the possible applications that may be chosen. Alternatively, the robot according to the invention may be movably guided in the assigned operating space, for example by placing the robot on a self-propelled vehicle, and all the functional advantages described with reference to robots with bases fixed to the ground can also be provided in this last-mentioned application.

Thus the invention achieves the proposed objects while providing the aforementioned advantages over the known solutions.

## Claims

1. A robotic system of the type comprising a multi-axis industrial robot (1) having a base structure (2), an articulated robot wrist (10), a chain of mutually articulated robot elements connecting the base structure (2) to the robot wrist (10), and means for controlling the movement of the robot (1) so that positions within a predetermined operating space of the robot can be reached by means of the wrist (10), the system being **characterized in that** it comprises a head (35) fixed to the robot wrist (10) and including a telemetric device (40) with three laser measuring devices (40a, 40b, 40c) and a passive video camera (50a) viewing device (50), both incorporated in the head (35), for the seeking, recognition, relative orientation and/or following of targets (30) or other similar objective signs associated with respective objects (20) or with surface portions of these objects (20) present in the operating space of the robot (1),and motor means on each robot (1) element of the chain that can be activated by the control means to move the robot in any direction and orientation in space, in order to enable the head (35) to reach any point in the corresponding operating space, the robot head (35) being designed to intercept the target (30) present in the operating space by using the laser telemetric device (40) and the passive video camera (50a) viewing device (50), to position itself relative to the target (30) with a predetermined relative orientation, and/or to follow the target (30) within the operating space while maintaining a predetermined orientation relative to the target along the target following path.

2. A robotic system according to Claim 1, comprising means for analysing respective signals relating to images acquired by the video camera (50a) and relating to telemetric data acquired by the laser measuring devices (40a, 40b, 40c), the signals being associated with the target or the objective sign (30) of the object (20), for the purpose of seeking and recognizing the position and orientation of the target (30) relative to the head (35), and means for calculating corresponding control signals to be sent to the movement control means of the robot (1), in order to position the robot relative to the target (30) and/or to follow the target (30) in an orientated way within the operating space of the robot (1).

3. A robotic system according to Claim 2, wherein the laser measuring devices (40a, 40b, 40c) are designed to identify the plane in which a target (30) lies relative to the head (35), by measuring the distance between each point (P1, P2, P3) of the surface portion containing the target (30) struck by the corresponding laser and the head (35), so that, with respect to a Cartesian reference frame x, y, z fixed on the head (35), with the z axis emerging from the head, the z coordinate of the target (30) is determined, together with the angular roll Rx and pitch Ry coordinates about the x and y axes respectively, these coordinates identifying the torsion of the plane (Pn11) in which the target (30) lies relative to the x and y axes, and wherein the video camera (50a) is designed to recognize the presence of the target (30) and to determine its x and y coordinates in the x, y, z reference system, together with the angular yaw coordinate Rz of the target (30) relative to the plane (Pn11) in which it lies, in such a way that the three Cartesian spatial coordinates and the three Eulerian angular coordinates are determined for the target (30), these coordinates jointly and uniquely identifying the position of the target (30) in the operating space of the robot (1) relative to the x, y, z reference system fixed on the head (35).

4. A robotic system according to any one or more of the preceding claims, wherein the passive viewing device (50) comprises an image acquisition card connected to a computer via a corresponding communications device, where the card is designed to sample a video signal from the video camera (50a) and store it in a memory bank of the computer in the form of an image matrix, means being provided to compare the elements of the matrix with the images of targets (30) or other similar identifying signs previously stored in the computer, in order to identify the presence of the target (30) in the image matrix, and to determine the position and orientation of the target relative to the x, y, z axis system fixed to the robot head (35).

5. A robotic system according to any one or more of the preceding claims, wherein the video camera (50a) and the laser measuring devices (40a, 40b, 40c) are positioned on the same side of a plate-like element (35a) of the head (35) fixed to the robot wrist (10).

6. A method for the operational control of the robotic system according to any one or more of the preceding claims, comprising the steps of:
- acquiring telemetric data determined by the laser measuring devices (40a, 40b, 40c),
- identifying the plane in which the target (30) lies,
- acquiring images captured by the video camera (50a),
- detecting the position of the target (30) in the plane in which it lies, so as to identify the position and orientation of the target (30) relative to the head (35) of the robot,
- specifying a predetermined positioning and orientation of the head (35) relative to the target (30) on the basis of the identified position of the target,
- moving the robot head (35) to achieve the predetermined positioning and orientation relative to the target (30).

7. A method according to Claim 6, wherein, for the purpose of following the target (30), the steps of telemetric data acquisition and image acquisition are repeated with a predetermined frequency, and a further step is provided in which the difference between the current condition of the position and orientation of the target (30) and a preceding condition is measured, the measured differences being used as the basis for the identification of the position and orientation of the head (35) that must be reached for the purpose of locking on to the target (30) in the orientated following movement.

## Patentansprüche

1. Robotersystem des Typs, der einen mehrachsigen Industrieroboter (1) mit einer Basisstruktur (2), einem gelenkigen Roboterhandgelenk (10), einer Kette von gegenseitig gelenkigen Roboterelementen, welche die Basisstruktur (2) mit dem Roboterhandgelenk (10) verbinden, und eine Einrichtung zum Steuern der Bewegung des Roboters (1) umfasst, sodass Positionen innerhalb eines vorbestimmten Arbeitsraums des Roboters mittels des Handgelenks (10) erreicht werden können, wobei das System **dadurch gekennzeichnet ist, dass** es einen Kopf (35) aufweist, der am Handgelenk (10) des Roboters fixiert ist und eine Telemetrievorrichtung (40) mit drei Lasermessvorrichtungen (40a, 40b, 40c) und einer passiven Videokamera (50a) Sichtvorrichtung (50), die beide in den Kopf (35) integriert sind aufweist, um Zielobjekte (30) oder andere ähnliche objektive Zeichen zu suchen, zu erkennen, relativ auszurichten und/oder zu verfolgen, die entsprechenden Objekten (20) oder Oberflächenabschnitten dieser Objekte (20) zugeordnet sind, die sich im Arbeitsraum des Roboters (1) befinden, und Motoreinrichtung an jedem Roboterelement der Kette umfasst, die durch die Steuereinrichtung aktivierbar sind, um den Roboter in jede Richtung und Ausrichtung im Raum zu bewegen, um dem Kopf (35) zu ermöglichen, jeden Punkt im entsprechenden Arbeitsraum zu erreichen, wobei der Roboterkopf (35) dazu ausgelegt ist, das im Arbeitsraum befindliche Zielobjekt (30) unter Verwendung der Laser-Telemetrievorrichtung (40) und der passiven Videokamera (50a) Sichtvorrichtung (50) abzufangen, um sich relativ zum Zielobjekt (30) mit einer vorbestimmten relativen Ausrichtung zu positionieren, und/oder dem Zielobjekt (30) innerhalb des Arbeitsraums unter Beibehaltung einer vorbestimmten Ausrichtung relativ zum Zielobjekt entlang des Zielverfolgungswegs zu folgen.

2. Robotersystem nach Anspruch 1, das eine Einrichtung zur Analyse jeweiliger Signale, die sich auf die von der Videokamera (50a) akquirierten Bilder beziehen und auf die von den Lasermessvorrichtungen (40a, 40b, 40c) akquirierten telemetrischen Daten beziehen, wobei die Signale dem Zielobjekt oder dem objektiven Zeichen (30) des Objekts (20) zugeordnet sind, um die Position und die Ausrichtung des Zielobjekts (30) relativ zum Kopf (35) zu suchen und zu erkennen, und eine Einrichtung zum Berechnen entsprechender Steuersignale umfasst, die an die Bewegungssteuereinrichtung des Roboters (1) zu senden sind, um den Roboter relativ zum Zielobjekt (30) zu positionieren und/oder dem Zielobjekt (30) innerhalb des Arbeitsraums des Roboters (1) ausgerichtet zu folgen.

3. Robotersystem nach Anspruch 2, wobei die Lasermessvorrichtungen (40a, 40b, 40c) dazu ausgelegt sind, die Ebene, in der ein Zielobjekt (30) relativ zum Kopf (35) liegt, durch Messen des Abstands zwischen jedem Punkt (P1, P2, P3) des Oberflächenabschnitts, der das vom entsprechenden Laser getroffene Zielobjekt (30) umfasst, und dem Kopf (35) zu identifizieren, sodass, in Bezug auf ein am Kopf (35) fixiertes kartesisches Bezugssystems x, y, z mit aus dem Kopf austretender z-Achse, die z-Koordinate des Zielobjekts (30) zusammen mit den Rollwinkelkoordinaten Rx und Neigungskoordinaten Ry jeweils um die x- und y-Achsen ermittelt wird, wobei diese Koordinaten die Torsion der Ebene (Pn11), in der das Zielobjekt (30) liegt, relativ zu den x- und y-Achsen identifiziert,
und wobei die Videokamera (50a) dazu ausgelegt ist, das vorhandene Zielobjekt (30) zu erkennen und dessen x- und y-Koordinaten im x, y, z-Bezugssystem zusammen mit der Gierwinkelkoordinate R2 des Zielobjekts (30) relativ zur Ebene (Pn11), in der es liegt, zu ermitteln, sodass die drei kartesischen Raumkoordinaten und die drei Eulerschen Winkelkoordinaten für das Zielobjekt (30) ermittelt werden, wobei diese Koordinaten die Position des Zielobjekts (30) im Arbeitsraum des Roboters (1) in Bezug auf das am Kopf (35) fixierte x, y, z-Bezugssystem gemeinsam und eindeutig identifizieren.

4. Robotersystem nach einem oder mehreren der vorhergehenden Ansprüche, wobei die passive Sichtvorrichtung (50) eine Bilderfassungskarte umfasst, die über eine entsprechende Kommunikationseinrichtung mit einem Computer verbunden ist, wobei die Karte dazu ausgelegt ist, ein Videosignal von der Videokamera (50a) abzurufen und in Form einer Bildmatrix in einer Speicherbank des Computers zu speichern, wobei eine Einrichtung zum Vergleichen der Elemente der Matrix mit den Bildern von Zielobjekten (30) oder anderen ähnlichen Identifizierungszeichen, die zuvor im Computer gespeichert wurden, vorgesehen ist, um das Vorhandensein des Zielobjekts (30) in der Bildmatrix zu identifizieren und die Position und die Ausrichtung des Zielobjekts in Bezug auf das am Roboterkopf (35) fixierte x, y, z-Achsensystem zu ermitteln.

5. Robotersystem nach einem oder mehreren der vorhergehenden Ansprüche, wobei die Videokamera (50a) und die Lasermessvorrichtungen (40a, 40b, 40c) auf der gleichen Seite eines plattenförmigen Elements (35a) des am Roboterhandgelenk (10) fixierten Kopfes (35) angeordnet sind.

6. Verfahren zur Betriebssteuerung des Robotersystems nach einem oder mehreren der vorhergehenden Ansprüche, das die folgenden Schritte umfasst:
- Akquirieren von telemetrischen Daten, die von den Lasermessvorrichtungen (40a, 40b, 40c) ermittelt wurden,
- Identifizieren der Ebene, in der das Zielobjekt (30) liegt,
- Akquirieren von Bildern, die von der Videokamera (50a) aufgenommen wurden,
- Erfassen der Position des Zielobjekts (30) in der Ebene, in der es liegt, um die Position und Ausrichtung des Zielobjekts (30) in Bezug auf den Kopf (35) des Roboters zu identifizieren,
- Spezifizieren einer vorbestimmten Positionierung und Ausrichtung des Kopfes (35) relativ zum Zielobjekt (30) basierend auf der identifizierten Position des Zielobjekts,
- Bewegen des Roboterkopfes (35), um die vorgegebene Positionierung und Ausrichtung relativ zum Zielobjekt (30) zu erreichen.

7. Verfahren nach Anspruch 6, wobei zur Verfolgung des Zielobjekts (30) die Schritte der telemetrischen Datenakquisition und der Bildakquisition mit einer vorgegebenen Häufigkeit wiederholt werden, und ein weiterer Schritt vorgesehen ist, in dem die Differenz zwischen dem aktuellen Zustand der Position und Ausrichtung des Zielobjekts (30) und einem vorangegangenen Zustand gemessen wird, wobei die gemessenen Differenzen als Grundlage für die Identifizierung der Position und Ausrichtung des Kopfes (35) verwendet werden, die zum Verfolgen des Zielobjekts (30) in der ausgerichteten Verfolgungsbewegung erreicht werden müssen.

## Revendications

1. Système robotique du type comprenant un robot industriel multiaxe (1) ayant une structure de base (2), un poignet de robot articulé (10), une chaîne d'éléments de robot mutuellement articulés reliant la structure de base (2) au poignet de robot (10), et un moyen pour commander le mouvement du robot (1) de sorte que des positions à l'intérieur d'un espace de fonctionnement prédéterminé du robot puissent être atteintes au moyen du poignet (10), le système étant **caractérisé en ce qu'**il comprend une tête (35) fixée au poignet de robot (10) et incluant un dispositif télémétrique (40) avec trois dispositifs de mesure laser (40a, 40b, 40c) et un dispositif de visualisation passif (50) à caméra vidéo (50a), les deux étant incorporés dans la tête (35), pour la recherche, la reconnaissance, l'orientation relative et/ou le suivi de cibles (30) ou d'autres signes objectifs similaires associés à des objets respectifs (20) ou à des portions de surface de ces objets (20) présents dans l'espace de fonctionnement du robot (1), et un moyen motorisé sur chaque élément de robot (1) de la chaîne qui peut être activé par le moyen de commande pour déplacer le robot dans n'importe quelle direction et n'importe quelle orientation dans l'espace, afin de permettre à la tête (35) d'atteindre n'importe quel point dans l'espace de fonctionnement correspondant, la tête de robot (35) étant conçue pour intercepter la cible (30) présente dans l'espace de fonctionnement en utilisant le dispositif télémétrique laser (40) et le dispositif de visualisation passif (50) à caméra vidéo (50a), pour se positionner par rapport à la cible (30) avec une orientation relative prédéterminée, et/ou pour suivre la cible (30) à l'intérieur de l'espace de fonctionnement tout en maintenant une orientation prédéterminée par rapport à la cible le long du trajet de suivi de cible.

2. Système robotique selon la revendication 1, comprenant un moyen pour analyser des signaux respectifs relatifs à des images acquises par la caméra vidéo (50a) et relatifs à des données télémétriques acquises par les dispositifs de mesure laser (40a, 40b, 40c), les signaux étant associés à la cible ou au signe objectif (30) de l'objet (20), dans le but de rechercher et de reconnaître la position et l'orientation de la cible (30) par rapport à la tête (35), et un moyen pour calculer des signaux de commande correspondants à envoyer au moyen de commande de mouvement du robot (1), afin de positionner le robot par rapport à la cible (30) et/ou de suivre la cible (30) d'une manière orientée à l'intérieur de l'espace de fonctionnement du robot (1).

3. Système robotique selon la revendication 2, dans lequel les dispositifs de mesure laser (40a, 40b, 40c) sont conçus pour identifier le plan dans lequel une cible (30) se trouve par rapport à la tête (35), en mesurant la distance entre chaque point (P1, P2, P3) de la portion de surface contenant la cible (30) frappée par le laser correspondant et la tête (35), de sorte que, par rapport à un cadre de référence cartésien x, y, z fixé à la tête (35), avec l'axe z émergeant de la tête, il soit déterminé la coordonnée z de la cible (30), ainsi que les coordonnées angulaires de roulis Rx et de tangage Ry respectivement autour des axes x et y, ces coordonnées identifiant la torsion du plan (Pn11) dans lequel la cible (30) se trouve par rapport aux axes x et y, et dans lequel la caméra vidéo (50a) est conçue pour reconnaître la présence de la cible (30) et pour déterminer ses coordonnées x et y dans le système de référence x, y, z, ainsi que la coordonnée angulaire de lacet Rz de la cible (30) par rapport au plan (Pn11) dans lequel elle se trouve, de telle manière que les trois coordonnées spatiales cartésiennes et les trois coordonnées angulaires eulériennes soient déterminées pour la cible (30), ces coordonnées identifiant conjointement et de manière unique la position de la cible (30) dans l'espace de fonctionnement du robot (1) par rapport au système de référence x, y, z fixé à la tête (35).

4. Système robotique selon l'une quelconque ou plusieurs des revendications précédentes, dans lequel le dispositif de visualisation passif (50) comprend une carte d'acquisition d'image reliée à un ordinateur via un dispositif de communication correspondant, où la carte est conçue pour échantillonner un signal vidéo provenant de la caméra vidéo (50a) et le stocker dans une banque de mémoire de l'ordinateur sous la forme d'une matrice d'image, un moyen étant prévu pour comparer les éléments de la matrice aux images de cibles (30) ou d'autres signes d'identification similaires préalablement stockés dans l'ordinateur, afin d'identifier la présence de la cible (30) dans la matrice d'image, et de déterminer la position et l'orientation de la cible par rapport au système d'axes x, y, z fixé à la tête de robot (35).

5. Système robotique selon l'une quelconque ou plusieurs des revendications précédentes, dans lequel la caméra vidéo (50a) et les dispositifs de mesure laser (40a, 40b, 40c) sont positionnés sur le même côté d'un élément en forme de plaque (35a) de la tête (35) fixé au poignet de robot (10).

6. Procédé pour la commande opérationnelle du système robotique selon l'une quelconque ou plusieurs des revendications précédentes, comprenant les étapes suivantes :
- l'acquisition de données télémétriques déterminées par les dispositifs de mesure laser (40a, 40b, 40c),
- l'identification du plan dans lequel se trouve la cible (30),
- l'acquisition d'images capturées par la caméra vidéo (50a),
- la détection de la position de la cible (30) dans le plan dans lequel elle se trouve, de manière à identifier la position et l'orientation de la cible (30) par rapport à la tête (35) du robot,
- la spécification d'un positionnement prédéterminé et d'une orientation prédéterminée de la tête (35) par rapport à la cible (30) sur la base de la position identifiée de la cible,
- le déplacement de la tête de robot (35) pour réaliser le positionnement prédéterminé et l'orientation prédéterminée par rapport à la cible (30).

7. Procédé selon la revendication 6, dans lequel, dans le but de suivre la cible (30), les étapes de l'acquisition de données télémétriques et de l'acquisition d'image sont répétées à une fréquence prédéterminée, et il est prévu une étape supplémentaire à laquelle la différence entre l'état actuel de la position et de l'orientation de la cible (30) et un état précédent est mesurée, les différences mesurées étant utilisées comme base pour l'identification de la position et l'orientation de la tête (35) qui doivent être atteintes dans le but de se verrouiller sur la cible (30) dans le mouvement de suivi orienté.
